# FASCICULE DE BREVET EUROPEEN

(11) **EP 3 997 320 B1**
(45) Date de publication et mention de la délivrance du brevet: **18.10.2023**
(21) Numéro de dépôt: 20747063.4
(22) Date de dépôt: 02.07.2020
(51) Int. Cl.: F02C 7/28, F02C 6/08, F01D 11/00

(54) **JOINT D'ÉTANCHÉITÉ POUR CARTER INTERMÉDIAIRE DE TURBOMACHINE**
DICHTUNG FÜR EIN ZWISCHENGEHÄUSE EINER TURBOMASCHINE
SEAL FOR AN INTERMEDIATE TURBOMACHINE CASING

(30) Priorité: 12.07.2019 FR 1907892
(43) Date de publication de la demande: 18.05.2022
(73) Titulaire: SAFRAN AIRCRAFT ENGINES, 75015 Paris (FR)
(72) Inventeur: ELLUIN, Gonzague Marie Come Jacques André, 77550 MOISSY CRAMAYEL (FR); CORDIER, Damien Didier Clément, 77550 MOISSY CRAMAYEL (FR); JACON, Bruno Alexandre Didier, 77550 MOISSY CRAMAYEL (FR); LACROIX, Florian Benjamin Kévin, 77550 MOISSY CRAMAYEL (FR); NABIAS, Philippe Didier Edmond Andre Liberal, 77550 MOISSY CRAMAYEL (FR); VITRA, Julien, 77550 MOISSY CRAMAYEL (FR)
(74) Mandataire: Cabinet Camus Lebkiri
(86) Numéro de dépôt international: PCT/FR2020/051156
(87) Numéro de publication internationale: WO 2021/009430

(56) Documents cités:
- EP-A2- 1 035 377
- WO-A1-2004/005002
- FR-A1- 3 036 136
- FR-A1- 3 064 029

## Description

### DOMAINE TECHNIQUE DE L'INVENTION

Le domaine technique de l'invention est celui des turbomachines.

La présente invention se rapporte plus particulièrement à un joint d'étanchéité permettant d'assurer l'étanchéité entre un conduit de décharge et une virole annulaire externe d'un carter intermédiaire de turbomachine. L'invention se rapporte également à une grille de décharge de carter intermédiaire comportant un tel joint d'étanchéité.

### ARRIERE-PLAN TECHNOLOGIQUE DE L'INVENTION

Une turbomachine à double flux comprend, d'amont en aval dans le sens de l'écoulement des gaz, une soufflante, un espace annulaire d'écoulement primaire et un espace annulaire d'écoulement secondaire. La masse d'air aspirée par la soufflante est divisée en un flux primaire, qui circule dans l'espace d'écoulement primaire, et en un flux secondaire, qui est concentrique avec le flux primaire et qui circule dans l'espace d'écoulement secondaire. L'espace annulaire d'écoulement primaire traverse un corps primaire comprenant un ou plusieurs étages de compresseurs, notamment un compresseur basse pression et un compresseur haute pression, une chambre de combustion, un ou plusieurs étages de turbines, notamment une turbine haute pression et une turbine basse pression, ainsi qu'une tuyère d'échappement des gaz.

La turbomachine comprend également un carter intermédiaire dont le moyeu est disposé entre le carter du compresseur basse pression et le carter du compresseur haute pression. Le moyeu du carter intermédiaire comprend deux viroles annulaires coaxiales : une virole annulaire interne délimitant l'espace d'écoulement primaire du flux primaire et une virole annulaire externe délimitant l'espace annulaire d'écoulement secondaire du flux secondaire.

Le carter intermédiaire comprend également des vannes de décharge régulièrement réparties autour de l'axe longitudinal de la turbomachine. Les vannes de décharge permettent de réguler le débit en entrée du compresseur haute pression afin notamment de limiter des risques de pompage du compresseur basse pression en évacuant une partie du flux primaire dans l'espace annulaire d'écoulement du flux secondaire dans certaines conditions de fonctionnement. Pour ce faire, chaque vanne de décharge comporte une porte montée pivotante autour d'un axe, de manière à être déplaçable angulairement par rapport au carter intermédiaire, entre une position d'obturation dans laquelle la porte obture un orifice d'entrée d'air ménagé dans la virole annulaire interne et une position d'ouverture de cet orifice permettant l'évacuation d'une partie du flux d'air primaire.

Les vannes de décharge comportent également un conduit de décharge qui assure l'évacuation d'une partie du flux primaire dans le flux secondaire. Les conduits de décharge s'étendent entre la virole annulaire interne et la virole annulaire externe et débouchent dans l'espace d'écoulement primaire à travers l'orifice d'entrée d'air formé dans la virole annulaire interne, et dans l'espace d'écoulement secondaire, à travers un orifice de sortie formé dans la virole annulaire externe. En outre, des grilles de décharge, comprenant des ailettes, sont fixées au niveau des orifices de sortie formés dans la virole annulaire externe afin de redresser le flux primaire lors de son injection dans le flux secondaire et d'empêcher que des débris s'introduisent dans le flux primaire par les conduits de décharge.

Dans la mesure où les vannes de décharge sont situées dans une zone à risque de feu, des joints étanches à l'air et au feu sont placés aux extrémités des conduits de décharge, notamment au niveau de la jonction entre le conduit de décharge et la virole annulaire externe, afin d'empêcher qu'un feu présent dans cette zone ne soit alimenté en air ou qu'il se propage dans l'espace d'écoulement secondaire.

Il est connu d'utiliser des joints d'étanchéité munis de picots pour assurer le maintien en position des joints d'étanchéité sur les extrémités des conduits de décharge.

Cependant, le montage de tels joints est contraignant et long à réaliser. De plus, les picots sont fréquemment endommagés lors de la mise en place des joints de sorte que l'appui du joint contre le conduit de décharge et donc sa compression peuvent être insuffisants. D'autre part, dans certains cas de fonctionnement comme la mise en pression de pompage du conduit de décharge, le joint peut se déplacer et donc ne peut plus assurer l'étanchéité de manière optimale.

Une autre solution utilisée pour la mise en place et le maintien en position du joint consiste à coller directement le joint sur le conduit de décharge.

Cependant, cette solution comporte de nombreux inconvénients, notamment en raison de l'outillage requis pour positionner le joint à coller, le temps de séchage de la colle, la génération de problématiques opérationnelles en maintenance lors de la défaillance du conduit de décharge ou du joint d'étanchéité.

Par ailleurs, un autre problème concerne le comportement dynamique des grilles de décharge. En effet, la réponse de certains modes propres des grilles de décharge génère des contraintes dynamiques conséquentes.

Une grille de décharge selon l'art antérieur est divulguée dans les documents FR3064029A1 et FR3036136A1.

### RÉSUMÉ DE L'INVENTION

Dans ce contexte, l'invention vise à proposer une solution permettant de résoudre ces inconvénients.

Ainsi, un premier aspect de l'invention concerne une grille de décharge selon la revendication 1.

Le joint d'étanchéité présente une section transversale en forme de U et comporte :
- une embase destinée à venir en appui contre le premier organe,
- une lèvre d'étanchéité destinée à venir en appui contre le deuxième organe par déformation de ladite lèvre d'étanchéité pour assurer une étanchéité à l'air et au feu par contact,
- des moyens d'accroches destinés à être crochetés sur la grille de décharge, la grille de décharge étant un troisième organe.

Le joint d'étanchéité permet de résoudre un ou plusieurs inconvénients de l'état de la technique précités.

Le montage et le démontage du joint d'étanchéité selon l'invention sont simplifiés et plus rapides. En effet, pour mettre en position le joint d'étancheité, il suffit de monter l'embase contre le premier organe et de crocheter les moyens d'accroches sur le troisième organe. Ensuite, il suffit de fixer le deuxième organe sur le premier organe ce qui assure la compression de la lèvre d'étanchéité entre lesdits organes et le maintien en position du joint d'étanchéité.

Afin de faciliter le montage du joint d'étancheité, ce dernier peut être crocheté sur le troisième organe puis être monté entre le premier organe et le deuxième organe, en même temps que le troisième organe.

En outre, le fait de monter les moyens d'accroche sur le troisième organe permet d'amortir les modes propres du troisième organe.

Outre les caractéristiques qui viennent d'être évoquées dans le paragraphe précédent, le joint d'étanchéité peut présenter une ou plusieurs caractéristiques complémentaires parmi les suivantes.

Selon un mode de réalisation non limitatif, les moyens d'accroche présentent une section transversale en forme de U renversé et comportent :
- un bras inférieur s'étendant dans le prolongement de l'embase,
- un bras supérieur sensiblement parallèle au bras inférieur,
- une base reliant le bras inférieur au bras supérieur, la base, le bras inférieur et le bras supérieur formant un logement configuré pour recevoir un bord périphérique du troisième organe.

Selon un mode de réalisation non limitatif, les moyens d'accroche présentent une section transversale en forme de U renversé et comportent :
- un bras inférieur s'étendant dans le prolongement de l'embase, le bras inférieur comportant au moins une ouverture traversante configurée pour recevoir un pion,
- un bras supérieur sensiblement parallèle au bras inférieur,
- une base reliant le bras inférieur au bras supérieur, la base, le bras inférieur et le bras supérieur formant un logement configuré pour recevoir un bord périphérique du troisième organe.

Selon un mode de réalisation non limitatif, les moyens d'accroche présentent une section transversale en forme de L renversé et comportent :
- un bras inférieur s'étendant dans le prolongement de l'embase,
- une base en saillie du bras inférieur, le bras inférieur formant, avec la base, un épaulement configuré pour recevoir un bord périphérique du troisième organe.

Selon un mode de réalisation non limitatif, les moyens d'accroche présentent une section transversale en forme de L renversé et comportent :
- un bras inférieur s'étendant dans le prolongement de l'embase,
- une base en saillie du bras inférieur, le bras inférieur formant, avec la base, un épaulement configuré pour recevoir un bord périphérique du troisième organe,
- au moins une protubérance s'étendant depuis le bras inférieur, parallèlement à la base, configuré pour coopérer avec au moins un alésage ménagé au niveau du bord périphérique du troisième organe.

Selon un mode de réalisation non limitatif, le joint d'étanchéité comporte des moyens d'adhérisation pour assurer le maintien du joint d'étanchéité sur le troisième organe.

Outre les caractéristiques qui viennent d'être évoquées dans le paragraphe précédent, la grille de décharge peut présenter une ou plusieurs caractéristiques complémentaires parmi les suivantes.

Selon un mode de réalisation non limitatif,
- les moyens d'accroche du joint d'étanchéité présentent une section transversale en forme de U renversé et comportent :
   - un bras inférieur s'étendant dans le prolongement de l'embase,
   - un bras supérieur sensiblement parallèle au bras inférieur,
   - une base reliant le bras inférieur au bras supérieur, la base, le bras inférieur et le bras supérieur formant un logement pour recevoir le bord périphérique de la grille de décharge,
- le bord périphérique comporte un méplat ménagé dans une partie inférieure dudit bord périphérique, pour venir en butée contre le bras inférieur des moyens d'accroche.

Selon un mode de réalisation non limitatif,
- le bord périphérique comporte :
   - au moins un alésage et,
   - un méplat ménagé dans une partie inférieure dudit bord périphérique,
- les moyens d'accroche présentent une section transversale en forme de U renversé et comportent :
   - un bras inférieur s'étendant dans le prolongement de l'embase et comportant au moins une ouverture traversante adaptée pour être agencée en regard dudit au moins un alésage,
   - un bras supérieur sensiblement parallèle au bras inférieur,
   - une base reliant le bras inférieur au bras supérieur, la base, le bras inférieur et le bras supérieur formant un logement adapté pour recevoir le bord périphérique de la grille de décharge de sorte que le méplat vienne en butée contre le bras inférieur des moyens d'accroche,
   - au moins un pion de adapté pour traverser ledit au moins un alésage ménagé dans le bord périphérique et ladite au moins une ouverture traversante ménagée dans le bras inférieur et à venir en butée contre le bras supérieur.

Selon un mode de réalisation non limitatif,
- le bord périphérique comporte un méplat ménagé dans une partie inférieure dudit bord périphérique,
- les moyens d'accroche présentent une section transversale en forme de L renversé et comportent :
   - un bras inférieur s'étendant dans le prolongement de l'embase,
   - une base en saillie du bras inférieur, le bras inférieur formant, avec la base, un épaulement adapté pour recevoir pour le bord périphérique de la grille de décharge de sorte que le méplat vienne en butée contre le bras inférieur des moyens d'accroche.

Selon un mode de réalisation non limitatif,
- le bord périphérique comporte :
   - au moins un alésage,
   - un méplat ménagé dans une partie inférieure dudit bord périphérique,
- les moyens d'accroche présentent une section transversale en forme de L renversé et comportent :
   - un bras inférieur s'étendant dans le prolongement de l'embase,
   - une base en saillie du bras inférieur, le bras inférieur formant, avec la base, un épaulement d'appui adapté pour recevoir un bord périphérique du troisième organe,
   - au moins une protubérance s'étendant, depuis le bras inférieur, parallèlement à la base, adapté pour s'introduire dans ledit au moins un alésage ménagé dans la grille de décharge.

Un deuxième aspect de l'invention concerne un carter intermédiaire de turbomachine à double flux, comportant :
- une virole annulaire interne configurée pour délimiter un espace d'écoulement primaire d'un flux de gaz primaire de la turbomachine,
- une virole annulaire externe configurée pour délimiter un espace d'écoulement secondaire d'un flux de gaz secondaire de la turbomachine,
- un conduit de décharge, s'étendant entre la virole annulaire interne et la virole annulaire externe, ledit conduit de décharge débouchant d'une part dans l'espace d'écoulement primaire à travers un orifice d'entrée formé dans la virole annulaire interne, et d'autre part dans l'espace d'écoulement secondaire à travers un orifice de sortie formé dans la virole annulaire externe,
- une grille de décharge selon le premier aspect de l'invention fixée au conduit de décharge, au niveau de l'orifice de sortie de la virole annulaire externe,
- un joint d'étanchéité agencé autour de la grille de décharge, entre la virole annulaire externe et le conduit de décharge de sorte que l'embase du joint d'étanchéité soit en appui contre le conduit de décharge, la lèvre d'étanchéité soit en appui contre la virole annulaire externe et que les moyens d'accroches soient montés sur un bord périphérique de la grille de décharge.

Enfin, l'invention selon un troisième aspect se rapporte à une turbomachine comportant un compresseur basse-pression, un compresseur haute-pression et un carter intermédiaire selon le deuxième aspect, positionné longitudinalement entre le compresseur basse-pression et le compresseur haute-pression.

### BREVE DESCRIPTION DES FIGURES

D'autres caractéristiques et avantages de l'invention ressortiront à la lecture de la description qui suit, en référence aux figures annexées, qui illustrent :
- la figure 1 illustre schématiquement, en coupe axiale, une turbomachine à double flux selon l'invention ;
- la figure 2 illustre une vue en coupe axiale d'une partie d'un moyeu d'un carter intermédiaire de turbomachine comportant un conduit de décharge,
- la figure 3a illustre une première vue en coupe axiale d'une partie d'un joint d'étanchéité selon un premier mode de réalisation de l'invention, disposé entre une virole annulaire externe et un conduit de décharge,
- La figure 3b illustre une deuxième vue en coupe axiale du joint d'étanchéité illustré à la figure 3a,
- La figure 4a illustre une première vue en coupe axiale d'une partie d'un joint d'étanchéité selon un deuxième mode de réalisation de l'invention, disposé entre une virole annulaire externe et un conduit de décharge,
- La figure 4b illustre une deuxième vue en coupe axiale d'une partie d'un joint d'étanchéité illustré à la figure 4a,
- La figure 5a illustre une première vue en coupe axiale d'une partie d'un joint d'étanchéité selon un troisième mode de réalisation de l'invention, disposé entre une virole annulaire externe et un conduit de décharge,
- La figure 5b illustre une deuxième vue en coupe axiale du joint d'étanchéité illustré à la figure 5a,
- La figure 6a illustre une première vue en coupe axiale d'une partie d'un joint d'étanchéité selon un quatrième mode de réalisation de l'invention, disposé entre une virole annulaire externe et un conduit de décharge,
- La figure 6b illustre une deuxième vue en coupe axiale du joint d'étanchéité illustré à la figure 6a.

### DESCRIPTION DETAILLEE

Les figures sont présentées à titre indicatif et nullement limitatif de l'invention.

Sauf précision contraire, un même élément apparaissant sur des figures différentes présente une référence unique.

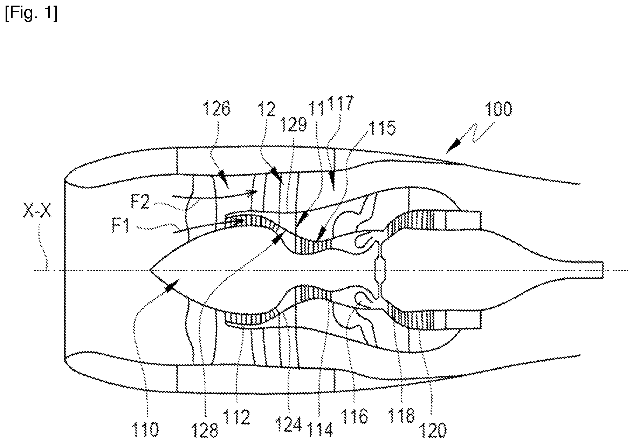

[Fig. 1] illustre schématiquement, en coupe axiale, une turbomachine à double flux.

Une telle turbomachine 100 comporte, de l'amont vers l'aval selon la direction d'écoulement des gaz, une soufflante 111, un compresseur basse pression 112, un compresseur haute pression 114, une chambre de combustion 116, une turbine haute pression 118 et une turbine basse pression 120. La turbine haute pression 118 est solidaire du compresseur haute pression 114 de manière à former un corps haute pression, tandis que la turbine basse pression 120 est solidaire du compresseur basse pression 112 de manière à former un corps basse pression, de sorte que chaque turbine entraîne le compresseur associé en rotation autour de l'axe X-X de la turbomachine 100 sous l'effet de la poussée des gaz provenant de la chambre de combustion 116.

La masse d'air aspirée par la soufflante 111 est divisée en un flux primaire F1, qui circule dans un espace d'écoulement primaire 115, et en un flux secondaire F2, qui est concentrique avec le flux primaire F1 et circule dans l'espace d'écoulement secondaire 117.

En outre, dans une telle turbomachine 100, un moyeu de carter intermédiaire 12 est interposé entre le compresseur basse pression 112, situé en amont, et le compresseur haute pression 114, situé en aval.

Dans la suite de la description, les termes « supérieur » et « inférieur » désignent une pièce ou une surface, respectivement, éloignée ou proche de l'axe de rotation de la turbomachine 100.

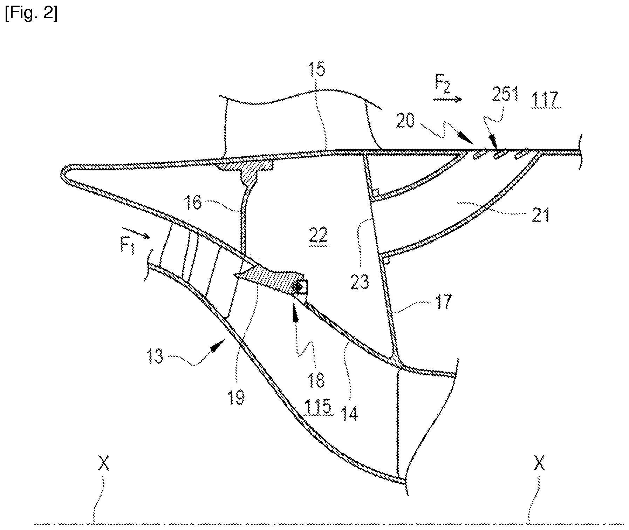

[Fig. 2] illustre une vue en coupe axiale d'une partie du moyeu du carter intermédiaire 12 de la turbomachine 100.

En référence à la figure 2, le moyeu 13 du carter intermédiaire 12 comprend deux viroles annulaires coaxiales, respectivement interne 14 et externe 15, reliées mutuellement par un flasque transversal amont 16 et par un flasque transversal aval 17. Le flasque amont 16 est agencé en aval du compresseur basse pression 112 tandis que le flasque aval 17 est agencé en amont du compresseur haute pression 114.

La virole interne 14 délimite l'espace annulaire d'écoulement primaire 115 du flux primaire F1 de la turbomachine 100 et comporte des orifices d'entrée d'air 18 répartis circonférenciellement autour de l'axe X-X de la turbomachine 100. Les orifices d'entrée d'air 18 sont obturés par une vanne de décharge 19 correspondante destinée à la régulation du débit du compresseur haute pression 114.

Une telle vanne de décharge 19 peut prendre la forme d'une porte qui est montée pivotante sur la virole interne 14 entre une position de fermeture, dans laquelle la porte ferme l'orifice d'entrée d'air 18 et une position d'ouverture, dans laquelle la porte fait saillie radialement vers l'intérieur par rapport à la virole interne 14 et permet ainsi le prélèvement d'une partie du flux primaire F1 dans l'espace d'écoulement primaire 115.

La virole externe 15 délimite quant à elle l'espace d'écoulement secondaire 117 du flux secondaire F2 de la turbomachine, et comporte des orifices de sortie d'air 20 agencés en aval du flasque transversal aval 17 et répartis circonférenciellement autour de l'axe X-X de la turbomachine 100.

Lorsque le débit d'air pouvant entrer dans le compresseur haute pression est réduit, un surplus d'air dans l'espace d'écoulement secondaire 14 peut alors être évacué par ces orifices de sortie 20, évitant ainsi des phénomènes de pompage pouvant conduire à une détérioration voire une destruction complète du compresseur basse pression 112.

La turbomachine 100 comprend, en outre, des veines de décharge formées entre les orifices d'entrée d'air 19 et les orifices de sortie 20. Chaque veine de décharge est délimitée, d'amont en aval entre un orifice d'entrée 18 et un orifice de sortie 20 associés, par un espace intermédiaire annulaire 22, délimité par les viroles interne 14, 15 et les flasques transversaux 16, 17, puis par un conduit de décharge 21, configuré pour guider le flux d'air jusqu'à l'espace d'écoulement secondaire 117. Le conduit de décharge 21 comprend ainsi un orifice intermédiaire 23, qui débouche dans l'espace intermédiaire 22 au niveau de la surface amont du flasque transversal aval 17.

De plus, des grilles de décharge 25, comprenant des ailettes 251, sont fixées, par le biais de vis de fixation, aux conduits de décharge 21, au niveau des orifices de sortie 20 de la virole annulaire externe 15. Les grilles de décharge 25 assurent le redressement du flux primaire F1 lors de son injection dans le flux secondaire F2, suivant une direction sensiblement parallèle à celle du flux secondaire F2 et afin d'empêcher que des débris s'introduisent dans le flux primaire F1 par les conduits de décharge 21.

De plus, un joint d'étanchéité 26, 27, 28, 29 selon l'invention, étanche à l'air et au feu, par exemple en élastomère, est logé au niveau de la jonction entre le conduit de décharge 21 et la virole annulaire externe 15, de manière à entourer la grille de décharge 25.

Avantageusement, le joint d'étanchéité 26, 27, 28, 29 présente une forme adaptée à celle de l'orifice de sortie 20 ménagé dans la virole annulaire externe 15. Ainsi, le joint d'étanchéité 26, 27, 28, 29 présente par exemple une forme rectangulaire, carrée ou encore circulaire.

Le joint d'étanchéité 26, 27, 28, 29 selon l'invention présente une section transversale en forme de U et comporte :
- une embase 261, 271, 281, 291 en appui contre le conduit de décharge 21,
- une lèvre d'étanchéité 262, 272, 282, 292 en appui contre la virole annulaire externe 15,
- des moyens d'accroche 263, 273, 283, 293 crochetés sur la grille de décharge 25.

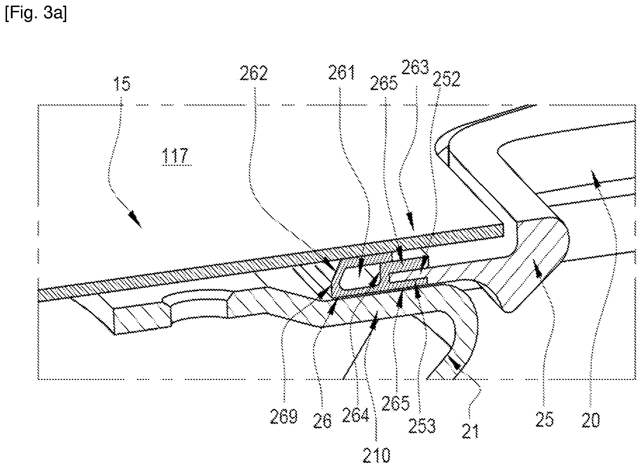

[Fig. 3a] illustre une première vue en coupe axiale d'une partie d'un joint d'étanchéité 26 selon un premier mode de réalisation de l'invention.

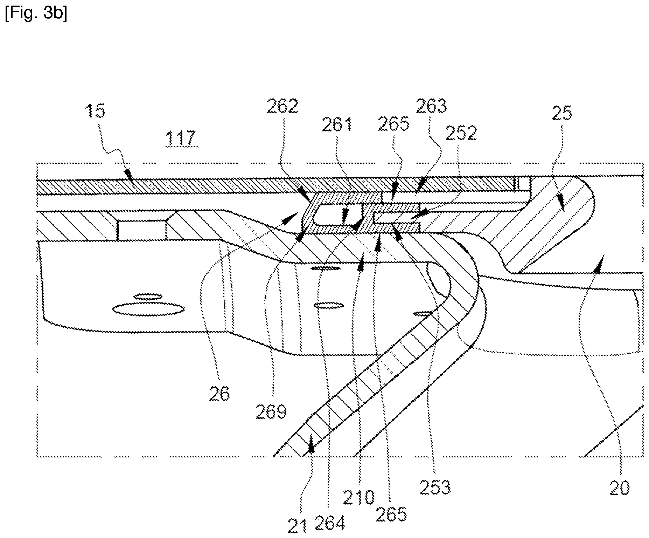

[Fig. 3b] illustre une deuxième vue en coupe axiale du joint d'étanchéité 26 illustré à la figure 3a.

En référence aux figures 3a et 3b, le joint d'étanchéité 26 comporte une embase 261 qui est en appui contre un rebord 210 du conduit de décharge 21. Avantageusement, l'embase 261 présente une surface inférieure convexe.

Dans la continuité de l'embase 261, le joint d'étanchéité 26 comporte une lèvre d'étanchéité 262 qui assure l'étanchéité entre le conduit de décharge 21 et la virole annulaire interne 15 par une déformation maitrisée de la lèvre d'étanchéité 262.

Comme on peut le voir sur les figures 3a et 3b, la portion du joint d'étanchéité 26 comprenant l'embase 261 et la lèvre d'étanchéité 262 présente une section transversale en forme de C. En effet, la lèvre d'étanchéité 262 s'étend longitudinalement en direction de la virole annulaire externe 15, de sorte que le joint d'étanchéité 26 forme une première courbure 269 au niveau de la jonction entre l'embase 261 et la lèvre d'étanchéité 262. En outre, le joint d'étanchéité 26 comprend une deuxième courbure formée par la déformation de la lèvre d'étanchéité 262 qui est comprimée par la virole annulaire externe 15. La compression de la lèvre d'étanchéité 262 par la virole annulaire externe 15 permet d'empêcher l'air et le feu de s'infiltrer entre la virole annulaire externe 15 et le conduit de décharge 21.

Par ailleurs, le joint d'étanchéité 26 comporte des moyens d'accroche 263 de section transversale en forme de U renversé. En particulier, dans ce premier mode de réalisation, les moyens d'accroches 263 comportent une base 264, un bras inférieur 265 et un bras supérieur 266 qui forment un logement permettant de recevoir le bord périphérique 252 de la grille d'évacuation 25.

Grâce au logement formé par les moyens d'accroche 263, les modes propres de la grille de décharge 25 sont amortis. En outre, étant donné la souplesse du joint d'étanchéité 26, les bras 265, 266 peuvent être crochetés manuellement sur le bord périphérique 252 de la grille de décharge 25 avant le montage de la grille de décharge 25 sur le conduit de décharge 21. Le maintien en position du joint d'étanchéité 26 sur le conduit de décharge 21 est assuré par la fixation de la grille de décharge 25 sur le rebord 210 du conduit de décharge 21, par exemple au moyen de vis de fixation. Ainsi, pour démonter le joint d'étanchéité 26, il suffit de dévisser la grille de décharge 25 du conduit de décharge 21 puis de dé-crocheter le joint d'étanchéité 26.

La grille de décharge 25 comporte, en outre, un méplat 252 ménagé dans une partie inférieure de son bord périphérique 252 qui vient en butée contre le bras inférieur 265 des moyens d'accroche 263. Le méplat 252 permet ainsi de maitriser la compression de l'embase 261 du joint d'étanchéité 26 lors de la fixation de la grille de décharge 20 sur le rebord 210 du conduit de décharge 21, et ainsi d'éviter le fluage ou la dégradation du joint d'étanchéité 26.

Avantageusement, le joint d'étanchéité 26 comporte des moyens d'adhérisation permettant d'assurer le maintien du joint d'étanchéité 26 sur le bord périphérique 252 de la grille de décharge 25. Les moyens d'adhérisation sont par exemple formés par un agent chimique ou par un film collé sur la surface de contact entre le joint d'étanchéité 26 et le bord périphérique 252 de la grille de décharge 25.

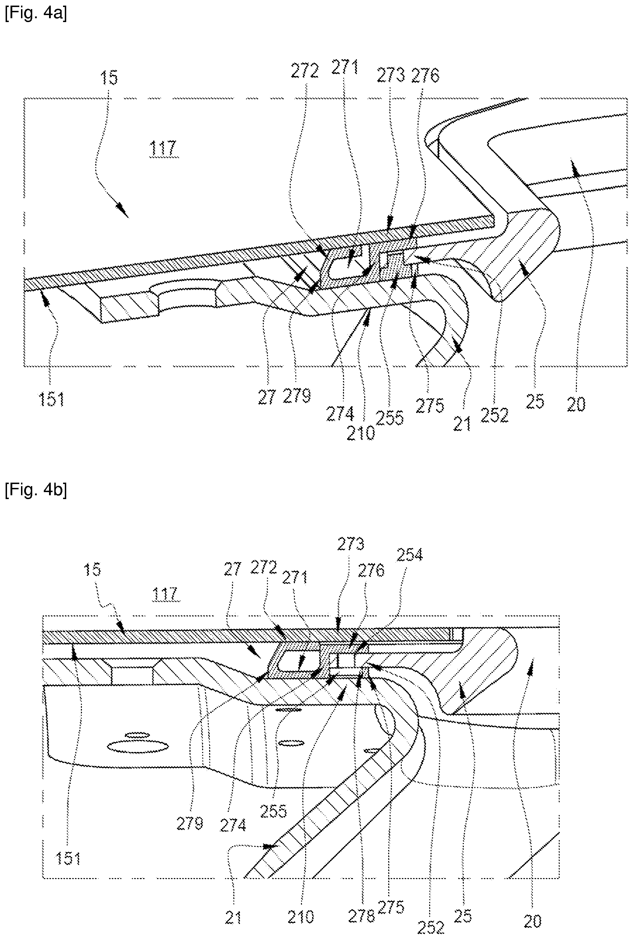

[Fig. 4a] illustre une première vue en coupe axiale d'une partie d'un joint d'étanchéité 27 selon un deuxième mode de réalisation de l'invention.

[Fig. 4b] illustre une deuxième vue en coupe axiale du joint d'étanchéité 27 illustré à la figure 4a.

En référence aux figures 4a et 4b, le joint d'étanchéité 27 comporte une embase 271 et une lèvre d'étanchéité 272 identiques, respectivement, à l'embase 261 et à la lèvre d'étanchéité 262 du joint d'étanchéité 26 selon le premier mode de réalisation.

En outre, les moyens d'accroches 273 sont également de section transversale en forme de U renversé et comportent une base 274, un bras inférieur 275 et un bras supérieur 276 qui forment un logement permettant de recevoir le bord périphérique 252 de la grille d'évacuation 25. Ainsi, les moyens d'accroches 273 peuvent être crochetés manuellement sur le bord périphérique 252 de la grille de décharge 25. Grâce au logement formé par les moyens d'accroche 273 du joint d'étanchéité 27, les modes propres de la grille de décharge 25 sont amortis. Avantageusement, le joint d'étanchéité 27 comporte également des moyens d'adhérisation permettant d'assurer le maintien du joint d'étanchéité 27 sur le bord périphérique 252 de la grille de décharge 25.

Cependant, à la différence du joint d'étanchéité 26 selon le premier mode de réalisation, le bras inférieur 275 des moyens d'accroche 273 comporte une pluralité d'ouvertures traversantes 278. Ces ouvertures traversantes 278 sont agencées en regard d'alésages 254 ménagés dans le bord périphérique 252 de manière à recevoir des pions 255 qui traversent les ouvertures traversantes 278 et les alésages 254. En particulier, chaque pion 255, par exemple en en aluminium comporte une tête disposée en appui contre le rebord 210 du conduit de décharge 21 et une tige qui traverse l'alésage 254 et l'ouverture traversante 278 jusqu'à venir en butée contre le bras supérieur 276 de manière à limiter l'écrasement du joint d'étanchéité 26. Les pions 255 permettent ainsi de maitriser la compression du joint d'étanchéité 26 lors de la fixation de la grille de décharge 25 sur le conduit de décharge 21. En outre, l'utilisation des pions 255 permet de diminuer l'épaisseur du bord périphérique 252 de la grille de décharge 25 et donc de réduire la masse de la grille de décharge 25. En outre, cela permet de faciliter son intégration dans un environnement souvent restreint.

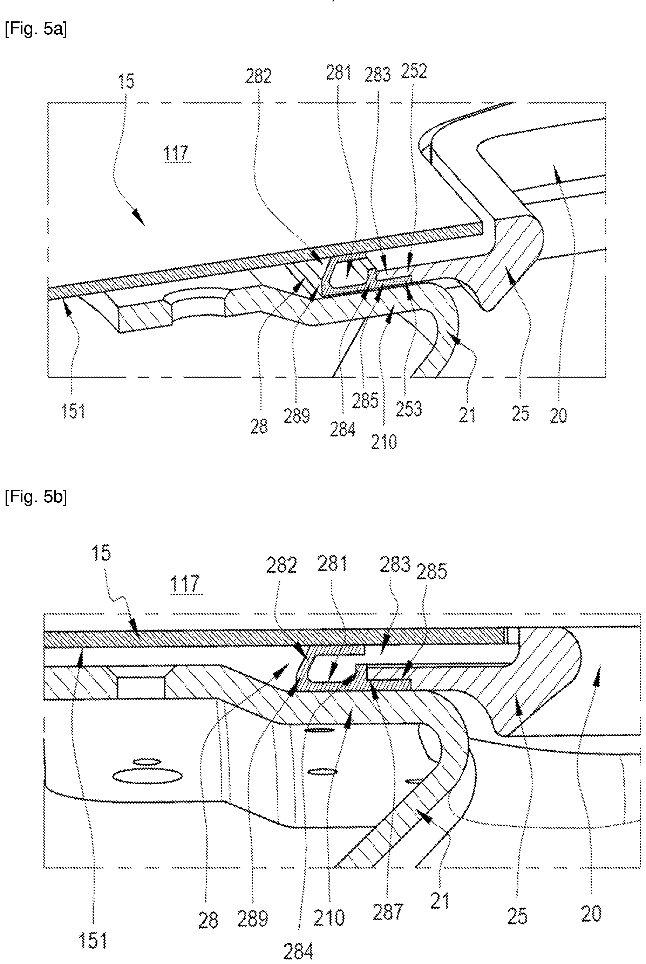

[Fig. 5a] illustre une première vue en coupe axiale d'une partie d'un joint d'étanchéité 28 selon un troisième mode de réalisation de l'invention.

[Fig. 5b] illustre une deuxième vue en coupe axiale du joint d'étanchéité 28 illustré à la figure 5a.

En référence aux figures 5a et 5b, le joint d'étanchéité 28 comporte une embase 281 et une lèvre d'étanchéité 282 identiques, respectivement, aux embases 261, 271 et aux lèvres d'étanchéité 262, 272 des joints d'étanchéité 26, 27 décrits précédemment.

Par ailleurs, à la différence des joints d'étanchéité 26, 27, les moyens d'accroche 283 présentent une section transversale en forme de L renversé. En particulier, les moyens d'accroche 283 comportent un bras inférieur 285 qui est dans la continuité de l'embase 281, en appui contre un rebord 210 du conduit de décharge 21 et une base 284 en saillie du bras inférieur 285. Le bras inférieur 285 forme, avec la base 284, un épaulement 287 adapté pour recevoir le bord périphérique 252 du troisième organe 25. Ainsi, le bord périphérique 252 est en butée contre l'épaulement 287 ce qui permet d'amortir les modes propres de la grille de décharge 25. Avantageusement, le joint d'étanchéité 28 comporte des moyens d'adhérisation permettant d'assurer le maintien du joint d'étanchéité 28 sur le bord périphérique 252 de la grille de décharge 25.

En outre, dans ce mode de réalisation, la grille de décharge 25 comporte également un méplat 252 ménagé dans une partie inférieure de son bord périphérique 252 qui vient en butée contre le bras inférieur 285 des moyens d'accroche 283. Ainsi, le méplat 252 permet de maitriser la compression de l'embase 281 du joint d'étanchéité 28 lors de la fixation de la grille de décharge 20 sur le rebord 210 du conduit de décharge 21, et ainsi d'éviter le fluage ou la dégradation du joint d'étanchéité 28.

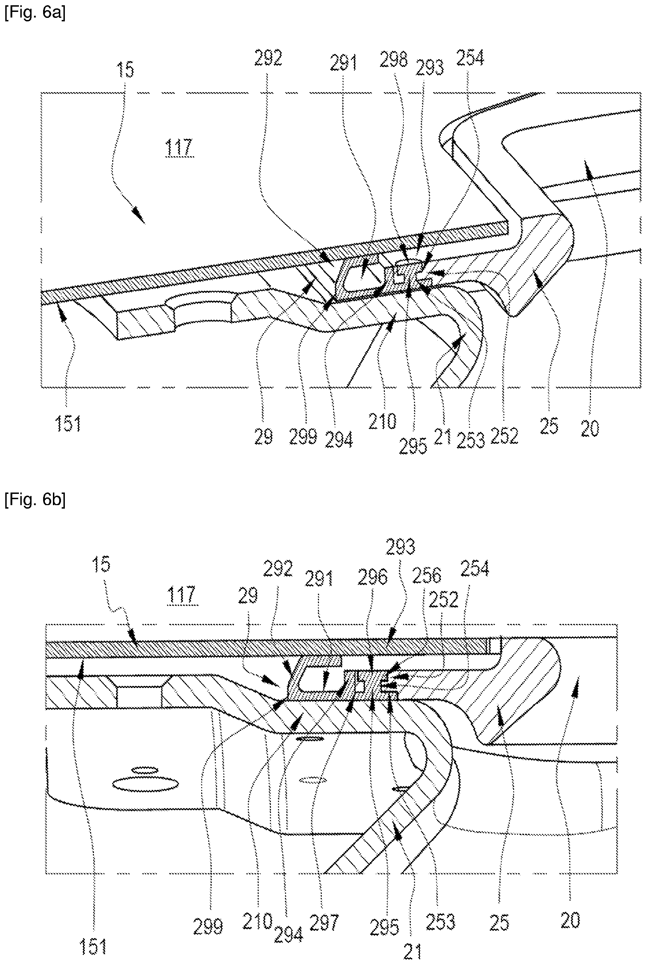

[Fig. 6a] illustre une première vue en coupe axiale d'une partie d'un joint d'étanchéité 29 selon un troisième mode de réalisation de l'invention.

[Fig. 6b] illustre une deuxième vue en coupe axiale du joint d'étanchéité 29 illustré à la figure 6a.

En référence aux figures 6a et 6b, le joint d'étanchéité 29 comporte une embase 291 et une lèvre d'étanchéité 292 identiques, respectivement, aux embases 261, 271, 281 et aux lèvres d'étanchéité 262, 272, 282 des joints d'étanchéité 26, 27, 28 décrits précédemment.

De la même manière que le joint d'étanchéité 28 selon le troisième mode de réalisation, les moyens d'accroche 293 présentent une section transversale en forme de L renversé. En outre, les moyens d'accroche 293 comportent un bras inférieur 295 dans le prolongement de l'embase 291 et une base 294 en saillie du bras inférieur 295. Le bras inférieur 295 forme, avec la base 294, un épaulement 297 adapté pour recevoir le bord périphérique 252 du troisième organe 25. Ainsi, le bord périphérique 252 est en butée contre l'épaulement 297 ce qui permet d'amortir les modes propres de la grille de décharge 25. Avantageusement, le joint d'étanchéité 29 comporte des moyens d'adhérisation permettant d'assurer le maintien du joint d'étanchéité 29 sur le bord périphérique 252 de la grille de décharge 25.

En outre, à la différence du joint d'étanchéité 28 selon le troisième mode de réalisation, les moyens d'accroche 293 comportent une pluralité de protubérances 296 qui s'étendent depuis le bras inférieur 295 des moyens d'accroche 293, suivant un axe parallèle à l'axe selon lequel s'étend la base 294. Chaque protubérance 296 comporte une tige qui s'étend depuis le bras inférieur 295 et une tête agencée au bout de la tige. Le montage des moyens d'accroche 293 sur la grille de décharge 25 est alors réalisé en insérant les protubérances 296 dans des alésage 256 ménagés dans le bord périphérique 252, de forme complémentaire aux protubérances 296. L'utilisation des protubérances 296 permet de diminuer l'épaisseur du bord périphérique 252 de la grille de décharge 25 et donc de réduire la masse de la grille de décharge 25. En outre, dans la mesure où les protubérances 296 font partie de la géométrie du joint d'étanchéité, l'assemblage avec la grille de décharge 25 est simplifié.

Dans ce mode de réalisation, la grille de décharge 25 comporte également un méplat 252 ménagé dans une partie inférieure de son bord périphérique 252 qui vient en butée contre le bras inférieur 295 des moyens d'accroche 293 de manière maitriser la compression de l'embase 291 du joint d'étanchéité 29 lors de la fixation de la grille de décharge 20 sur le rebord 210 du conduit de décharge 21, et ainsi d'éviter le fluage ou la dégradation du joint d'étanchéité 29.

Les modes de réalisation décrits ci-dessus ne sont nullement limitatifs, et des modifications peuvent y être apportées sans sortir du cadre de l'invention.

## Revendications

1. Grille de décharge (25) de carter intermédiaire (12) de turbomachine (100), comportant un bord périphérique (252) et un joint d'étanchéité (26, 27, 28, 29) monté sur ledit bord périphérique (252) via des moyens d'accroche (263, 273, 283, 293), le joint d'étanchéité (26, 27, 28, 29) assurant l'étanchéité entre un premier organe de turbomachine (100), tel qu'un conduit de décharge (21) de carter intermédiaire (12), et un deuxième organe de la turbomachine (100), telle qu'une virole annulaire externe (15) de carter intermédiaire (12), et entourant la grille de décharge (25) du carter intermédiaire (12), ledit joint d'étanchéité (26, 27, 28, 29) étant **caractérisé en ce qu'**il présente une section transversale en forme de U et comporte :
- une embase (261, 271, 281, 291) destinée à venir en appui contre le premier organe,
- une lèvre d'étanchéité (262, 272, 282, 292) destinée à venir en appui contre le deuxième organe par déformation de ladite lèvre d'étanchéité (262, 272, 282, 292) pour assurer une étanchéité à l'air et au feu par contact,

2. Grille de décharge (25) de carter intermédiaire (12) de turbomachine (100), selon la revendication précédente, **caractérisée en ce que** les moyens d'accroche (263) présentent une section transversale en forme de U renversé et comportent :
- un bras inférieur (265) s'étendant dans le prolongement de l'embase (261),
- un bras supérieur (266) sensiblement parallèle au bras inférieur (265),
- une base (264) reliant le bras inférieur (265) au bras supérieur (266), la base (264), le bras inférieur (265) et le bras supérieur (266) formant un logement configuré pour recevoir un bord périphérique (252) de la grille de décharge (25).

3. Grille de décharge (25) de carter intermédiaire (12) de turbomachine (100) selon la revendication 1, **caractérisée en ce que** les moyens d'accroche (263) présentent une section transversale en forme de U renversé et comportent :
- un bras inférieur (275) s'étendant dans le prolongement de l'embase (271), le bras inférieur (275) comportant au moins une ouverture traversante (278) configurée pour recevoir un pion (255),
- un bras supérieur (276) sensiblement parallèle au bras inférieur (275),
- une base (274) reliant le bras inférieur (275) au bras supérieur (276), la base (274), le bras inférieur (275) et le bras supérieur (276) formant un logement configuré pour recevoir un bord périphérique (252) de la grille de décharge (25).

4. Grille de décharge (25) de carter intermédiaire (12) de turbomachine (100) selon la revendication 1, **caractérisée en ce que** les moyens d'accroche (283) présentent une section transversale en forme de L renversé et comportent :
- un bras inférieur (285) s'étendant dans le prolongement de l'embase (281),
- une base (284) agencée en saillie du bras inférieur (285), le bras inférieur (285) formant, avec la base (284), un épaulement (287) configuré pour recevoir un bord périphérique (252) de la grille de décharge (25).

5. Grille de décharge (25) de carter intermédiaire (12) de turbomachine (100) selon la revendication 1, **caractérisée en ce que** les moyens d'accroche (293) présentent une section transversale en forme de L renversé et comportent :
- un bras inférieur (295) s'étendant dans le prolongement de l'embase (291),
- une base (294) agencée en saillie du bras inférieur (285), le bras inférieur (295) formant, avec la base (294), un épaulement (297) configuré pour recevoir un bord périphérique (252) de la grille de décharge (25),
- au moins une protubérance (296) s'étendant depuis le bras inférieur (295), parallèlement à la base (291), configuré pour coopérer avec au moins un alésage (256) ménagé au niveau du bord périphérique (252) de la grille de décharge (25).

6. Grille de décharge (25) de carter intermédiaire (12) de turbomachine (100) selon l'une quelconque des revendications précédentes, **caractérisé en ce que** le joint d'étanchéité (26, 27, 28, 29) comporte des moyens d'adhérisation pour assurer le maintien du joint d'étanchéité (26, 27, 28, 29) sur la grille de décharge (25).

7. Grille de décharge (25) selon la revendication 1, **caractérisée en ce que** :
- les moyens d'accroche (263) du joint d'étanchéité (26) présentent une section transversale en forme de U renversé et comportent :
o un bras inférieur (265) s'étendant dans le prolongement de l'embase (261),
∘ un bras supérieur (266) sensiblement parallèle au bras inférieur (265),
o une base (264) reliant le bras inférieur (265) au bras supérieur (266), la base (264), le bras inférieur (265) et le bras supérieur (266) formant un logement pour recevoir le bord périphérique (252) de la grille de décharge (25),
- le bord périphérique (252) comporte un méplat (253) ménagé dans une partie inférieure dudit bord périphérique (252), pour venir en butée contre le bras inférieur (265) des moyens d'accroche (263).

8. Grille de décharge (25) selon la revendication 1, **caractérisée en ce que** :
- le bord périphérique (252) comporte :
∘ au moins un alésage (254) et,
o un méplat (253) ménagé dans une partie inférieure dudit bord périphérique (252),
- les moyens d'accroche (273) présentent une section transversale en forme de U renversé et comportent :
o un bras inférieur (275) s'étendant dans le prolongement de l'embase (261) et comportant au moins une ouverture traversante (278) adaptée pour être agencée en regard dudit au moins un alésage (254),
o un bras supérieur (276) sensiblement parallèle au bras inférieur (275),
o une base (274) reliant le bras inférieur (275) au bras supérieur (276) ; la base (274), le bras inférieur (275) et le bras supérieur (276) formant un logement adapté pour recevoir le bord périphérique (252) de la grille de décharge (25) de sorte que le méplat (253) vienne en butée contre le bras inférieur (275) des moyens d'accroche (273),
∘ au moins un pion (255) adapté pour traverser ledit au moins un alésage (254) ménagé dans le bord périphérique (252) et ladite au moins une ouverture traversante (278) ménagée dans le bras inférieur (275) et à venir en butée contre le bras supérieur (276).

9. Grille de décharge (25) selon la revendication 1, **caractérisée en ce que** :
- le bord périphérique (252) comportant un méplat (253) ménagé dans une partie inférieure dudit bord périphérique (252),
- les moyens d'accroche (283) présentent une section transversale en forme de L renversé et comportent :
o un bras inférieur (285) s'étendant dans le prolongement de l'embase (261),
∘ une base (284) en saillie du bras inférieur (285),
o le bras inférieur (285) formant, avec la base (284), un épaulement (287) adapté pour recevoir pour le bord périphérique (252) de la grille de décharge (25) de sorte que le méplat (253) vienne en butée contre le bras inférieur (285) des moyens d'accroche (273).

10. Grille de décharge (25) selon la revendication 1, **caractérisée en ce que** :
- le bord périphérique (252) comportant :
- au moins un alésage (256),
- un méplat (253) ménagé dans une partie inférieure dudit bord périphérique (252),
- les moyens d'accroche (283) présentent une section transversale en forme de L renversé et comportent :
o un bras inférieur (295) s'étendant dans le prolongement de l'embase (291),
∘ une base (294) en saillie du bras inférieur (295), le bras inférieur (295) formant, avec la base (294), un épaulement d'appui adapté pour recevoir un bord périphérique (152) de la grille de décharge (25),
∘ au moins une protubérance (296) s'étendant depuis le bras inférieur (295) parallèlement à la base (294), adapté pour s'introduire dans ledit au moins un alésage (256) ménagé dans la grille de décharge (25).

11. Carter intermédiaire (12) de turbomachine (100) à double flux, comportant :
- une virole annulaire interne (14) configurée pour délimiter un espace d'écoulement primaire (115) d'un flux de gaz primaire (F1) de la turbomachine (100),
- une virole annulaire externe (15) configurée pour délimiter un espace d'écoulement secondaire (117) d'un flux de gaz secondaire (F2) de la turbomachine (100),
- un conduit de décharge (21), s'étendant entre la virole annulaire interne (14) et la virole annulaire externe (15), ledit conduit de décharge (21) débouchant d'une part dans l'espace d'écoulement primaire (115) à travers un orifice d'entrée (18) formé dans la virole annulaire interne (14), et d'autre part dans l'espace d'écoulement secondaire (117) à travers un orifice de sortie (20) formé dans la virole annulaire externe (15),
- une grille de décharge (25) selon l'une quelconque des revendications précédentes, fixée au conduit de décharge (21), au niveau de l'orifice de sortie (20) de la virole annulaire externe (15),
- le joint d'étanchéité (26, 27, 28, 29) agencé autour de la grille de décharge (25), entre la virole annulaire externe (15) et le conduit de décharge (21) de sorte que l'embase (261, 271, 281, 291) du joint d'étanchéité (26, 27, 28, 29) soit en appui contre le conduit de décharge (21), la lèvre d'étanchéité (262, 272, 282, 292) soit en appui contre la virole annulaire externe (15) et que les moyens d'accroche (263, 273, 283, 293) soient crochetés sur un bord périphérique (252) de la grille de décharge (25).

12. Turbomachine (100) **caractérisée en ce qu'**elle comporte un compresseur basse-pression (112), un compresseur haute-pression (114) et un carter intermédiaire (12) selon la revendication 12, positionné longitudinalement entre le compresseur basse-pression (112) et le compresseur haute-pression (114).

## Patentansprüche

1. Auslassgitter (25) eines Zwischengehäuses (12) einer Turbomaschine (100), mit einem umlaufenden Rand (252) und einer Dichtung (26, 27, 28, 29), die über Haltemittel (263, 273, 283, 293) an dem umlaufenden Rand (252) angebracht ist, wobei die Dichtung (26, 27, 28, 29) die Dichtigkeit zwischen einem ersten Organ der Turbomaschine (100), wie zum Beispiel eine Auslassleitung (21) des Zwischengehäuses (12), und einem zweiten Organ der Turbomaschine (100), wie zum Beispiel ein ringförmiger Außenmantel (15) des Zwischengehäuses (12), sicherstellt und das Auslassgitter (25) des Zwischengehäuses (12) umgibt, wobei die Dichtung (26, 27, 28, 29) **dadurch gekennzeichnet ist, dass** sie einen U-förmigen Querschnitt hat und Folgendes aufweist:
- eine Sohle (261, 271, 281, 291), die dazu bestimmt ist, gegen das erste Organ in Anlage zu kommen,
- eine Dichtlippe (262, 272, 282, 292), die dazu bestimmt ist, durch Verformung dieser Dichtlippe (262, 272, 282, 292) gegen das zweite Organ in Anlage zu kommen, um durch Kontakt eine Luft- und Feuerdichtigkeit zu gewährleisten.

2. Auslassgitter (25) eines Zwischengehäuses (12) einer Turbomaschine (100), nach dem vorhergehenden Anspruch, **dadurch gekennzeichnet, dass** das Haltemittel (263) einen umgekehrten U-förmigen Querschnitt hat und Folgendes aufweist:
- einen unteren Arm (265), der sich in Verlängerung der Sohle (261) erstreckt,
- einen oberen Arm (266), der sich im Wesentlichen parallel zu dem unteren Arm (265) erstreckt,
- eine Basis (264), die den unteren Arm (265) mit dem oberen Arm (266) verbindet, wobei die Basis (264), der untere Arm (265) und der obere Arm (266) eine Aufnahme bilden, die konfiguriert ist, um einen umlaufenden Rand (252) des Auslassgitters (25) aufzunehmen.

3. Auslassgitter (25) eines Zwischengehäuses (12) einer Turbomaschine (100), nach Anspruch 1, **dadurch gekennzeichnet, dass** das Haltemittel (263) einen umgekehrten U-förmigen Querschnitt hat und Folgendes aufweist:
- einen unteren Arm (275), der sich in Verlängerung der Sohle (271) erstreckt, wobei der untere Arm (275) wenigstens eine durchgehende Öffnung (278) aufweist, die konfiguriert ist, um einen Zapfen (255) aufzunehmen,
- einen oberen Arm (276), der sich im Wesentlichen parallel zu dem unteren Arm (275) erstreckt,
- eine Basis (274), die den unteren Arm (275) mit dem oberen Arm (276) verbindet, wobei die Basis (274), der untere Arm (275) und der obere Arm (276) eine Aufnahme bilden, die konfiguriert ist, um einen umlaufenden Rand (252) des Auslassgitters (25) aufzunehmen.

4. Auslassgitter (25) eines Zwischengehäuses (12) einer Turbomaschine (100) nach Anspruch 1, **dadurch gekennzeichnet, dass** das Haltemittel (283) einen umgekehrten L-förmigen Querschnitt hat und Folgendes aufweist:
- einen unteren Arm (285), der sich in Verlängerung der Sohle (281) erstreckt,
- eine Basis (284), die so ausgebildet ist, dass sie über den unteren Arm (285) herausragt, wobei der untere Arm (285) gemeinsam mit der Basis (284) einen Ansatz (287) bildet, der konfiguriert ist, um einen umlaufenden Rand (252) des Auslassgitters (25) aufzunehmen.

5. Auslassgitter (25) eines Zwischengehäuses (12) einer Turbomaschine (100) nach Anspruch 1, **dadurch gekennzeichnet, dass** das Haltemittel (293) einen umgekehrten L-förmigen Querschnitt hat und Folgendes aufweist:
- einen unteren Arm (295), der sich in Verlängerung der Sohle (291) erstreckt,
- eine Basis (294), die so ausgebildet ist, dass sie über den unteren Arm (295) herausragt, wobei der untere Arm (295) gemeinsam mit der Basis (294) einen Ansatz (297) bildet, der konfiguriert ist, um einen umlaufenden Rand (252) des Auslassgitters (25) aufzunehmen,
- wenigstens einen Vorsprung (296), der sich von dem unteren Arm (295) parallel zu der Basis (291) erstreckt und konfiguriert ist, um mit mindestens einer Bohrung (256) zusammenzuwirken, die an dem umlaufenden Rand (252) des Auslassgitters (25) ausgebildet ist.

6. Auslassgitter (25) eines Zwischengehäuses (12) einer Turbomaschine (100) nach einem der vorhergehenden Ansprüche, **dadurch gekennzeichnet, dass** die Dichtung (26, 27, 28, 29) Haftmittel aufweist, um die Haftung der Dichtung (26, 27, 28, 29) auf dem Auslassgitter (25) sicherzustellen.

7. Auslassgitter (25) nach Anspruch 1, **dadurch gekennzeichnet, dass**:
- das Haltemittel (263) der Dichtung (26) einen umgekehrten U-förmigen Querschnitt hat und Folgendes aufweist:
o einen unteren Arm (265), der sich in Verlängerung der Sohle (261) erstreckt,
o einen oberen Arm (266), der sich im Wesentlichen parallel zu dem unteren Arm (265) erstreckt,
o eine Basis (264), die den unteren Arm (265) mit dem oberen Arm (266) verbindet, wobei die Basis (264), der untere Arm (265) und der obere Arm (266) eine Aufnahme bilden, die konfiguriert ist, um den umlaufenden Rand (252) des Auslassgitters (25) aufzunehmen,
- der umlaufende Rand (252) eine Abflachung (253) aufweist, die in einem unteren Teil des umlaufenden Rands (252) ausgebildet ist, um gegen den unteren Arm (265) des Haltemittels (263) in Anschlag zu kommen.

8. Auslassgitter (25) nach Anspruch 1, **dadurch gekennzeichnet, dass**:
- der umlaufende Rand (252) Folgendes aufweist:
o wenigstens eine Bohrung (254) und,
o eine Abflachung (253), die in einem unteren Teil des umlaufenden Rands (252) ausgebildet ist,
- das Haltemittel (273) einen umgekehrten U-förmigen Querschnitt hat und Folgendes aufweist:
o einen unteren Arm (275), der sich in Verlängerung der Sohle (261) erstreckt und wenigstens eine durchgehende Öffnung (278) aufweist, die ausgelegt ist, um gegenüber der wenigstens einen Bohrung (254) angeordnet zu werden,
o einen oberen Arm (276), der sich im Wesentlichen parallel zu dem unteren Arm (275) erstreckt,
o eine Basis (274), die den unteren Arm (275) mit dem oberen Arm (276) verbindet, wobei die Basis (274), der untere Arm (275) und der obere Arm (276) eine Aufnahme bilden, die ausgelegt ist, um den umlaufenden Rand (252) des Auslassgitters (273) aufzunehmen, so dass die Abflachung (253) gegen den unteren Arm (275) des Haltemittels (273) in Anschlag kommt,
o wenigstens einen Zapfen (255), der ausgelegt ist, um durch die wenigstens eine Bohrung (254), die an dem umlaufenden Rand (252) ausgebildet ist, und die wenigstens eine durchgehende Öffnung (278), die in dem unteren Arm (275) ausgebildet ist, hindurchzutreten, und gegen den oberen Arm (276) in Anschlag zu kommen.

9. Auslassgitter (25) nach Anspruch 1, **dadurch gekennzeichnet, dass**:
- der umlaufende Rand (252) eine Abflachung (253) aufweist, die in einem unteren Teil des umlaufenden Rands (252) ausgebildet ist,
- das Haltemittel (283) einen umgekehrten L-förmigen Querschnitt hat und Folgendes aufweist:
o einen unteren Arm (285), der sich in Verlängerung der Sohle (261) erstreckt,
o eine Basis (284), die über den unteren Arm (285) herausragt,
o wobei der untere Arm (285) gemeinsam mit der Basis (284) einen Ansatz (287) bildet, der ausgelegt ist, um den umlaufenden Rand (252) des Auslassgitters (25) aufzunehmen, so dass die Abflachung (253) gegen den unteren Arm (285) des Haltemittels (273) in Anschlag kommt.

10. Auslassgitter (25) nach Anspruch 1, **dadurch gekennzeichnet, dass**:
- der umlaufende Rand (252) Folgendes aufweist:
- wenigstens eine Bohrung (256),
- eine Abflachung (253), die in einem unteren Teil des umlaufenden Rands (252) ausgebildet ist,
- das Haltemittel (283) einen umgekehrten L-förmigen Querschnitt hat und Folgendes aufweist:
o einen unteren Arm (295), der sich in Verlängerung der Sohle (291) erstreckt,
o eine Basis (294), die über den unteren Arm (295) herausragt, wobei der untere Arm (295) gemeinsam mit der Basis (294) einen Ansatz bildet, der ausgelegt ist, um einen umlaufenden Rand (252) des Auslassgitters (25) aufzunehmen,
o wenigstens einen Vorsprung (296), der sich von dem unteren Arm (295) parallel zu der Basis (294) erstreckt und ausgelegt ist, um in die wenigstens eine Bohrung (256), die in dem Auslassgitter (25) ausgebildet ist, eingeführt zu werden.

11. Zwischengehäuse (12) einer Zweikreis-Turbomaschine (100), das Folgendes aufweist:
- einen ringförmigen Innenmantel (14), der konfiguriert ist, um einen primären Strömungsraum (115) eines primären Gasstroms (F1) der Turbomaschine (100) zu begrenzen,
- einen ringförmigen Außenmantel (15), der konfiguriert ist, um einen sekundären Strömungsraum (117) eines sekundären Gasstroms (F2) der Turbomaschine (100) zu begrenzen,
- eine Auslassleitung (21), die sich zwischen dem ringförmigen Innenmantel (14) und dem ringförmigen Außenmantel (15) erstreckt, wobei die Auslassleitung (21) einerseits in den primären Strömungsraum (115) durch eine Einlassöffnung (18), die in dem ringförmigen Innenmantel (14) ausgebildet ist, mündet und andererseits in den sekundären Strömungsraum (117) durch eine Auslassöffnung (20), die in dem ringförmigen Außenmantel (15) ausgebildet ist, mündet,
- ein Auslassgitter (25) nach einem der vorhergehenden Ansprüche, das an der Auslassleitung (21) in Höhe der Auslassöffnung (20) des ringförmigen Außenmantels (15) befestigt ist,
- wobei die Dichtung (26, 27, 28, 29), die um das Auslassgitter (25) herum zwischen dem ringförmigen Außenmantel (15) und der Auslassleitung (21) ausgebildet ist, so dass sich die Sohle (261, 271, 281, 291) der Dichtung (26, 27, 28, 29) in Anschlag gegen die Auslassleitung (21) befindet, die Dichtlippe (262, 272, 282, 292) in Anschlag gegen den ringförmigen Außenmantel (15) befindet und das Haltemittel (263, 273, 283, 293) an einem umlaufenden Rand (252) des Auslassgitters (25) befestigt ist.

12. Turbomaschine (100) **dadurch gekennzeichnet, dass** sie einen Niederdruckverdichter (112), einen Hochdruckverdichter (114) und ein Zwischengehäuse (12) nach Anspruch 11 aufweist, das in Längsrichtung zwischen dem Niederdruckverdichter (112) und dem Hochdruckverdichter (114) positioniert ist.

## Claims

1. Discharge grille (25) of an intermediate casing (12) of a turbomachine (100), comprising a peripheral edge (252) and a seal (26, 27, 28, 29) mounted on said peripheral edge (252) via attachment means (263, 273, 283, 293), the seal (26, 27, 28, 29) ensuring the sealing between a first turbomachine member (100), such as a discharge duct (21) of an intermediate casing (12), and a second member of the turbomachine (100), such as an outer annular shroud (15) of an intermediate casing (12), and surrounding the discharge grille (25) of the intermediate casing (12), said seal (26, 27, 28, 29) being **characterised in that** it has a U-shaped cross section and comprises:
- a base plate (261, 271, 281, 291) intended to bear against the first member,
- a sealing lip (262, 272, 282, 292) intended to bear against the second member through deformation of said sealing lip (262, 272, 282, 292) to ensure air tightness and fire proofing through contact.

2. Discharge grille (25) of an intermediate casing (12) of a turbomachine (100), according to claim 1, **characterised in that** the attachment means (263) have an inverted U-shaped cross section and comprise:
- a lower arm (265) extending into the continuation of the base plate (261),
- an upper arm (266) substantially parallel to the lower arm (265),
- a base (264) connecting the lower arm (265) to the upper arm (266), the base (264), the lower arm (265) and the upper arm (266) forming a housing configured to receive a peripheral edge (252) of the discharge grille (25).

3. Discharge grille (25) of an intermediate casing (12) of a turbomachine (100) according to claim 1, **characterised in that** the attachment means (263) have an inverted U-shaped cross section and comprise:
- a lower arm (275) extending into the continuation of the base plate (271), the lower arm (275) comprising at least one through opening (278) configured to receive a slug (255),
- an upper arm (276) substantially parallel to the lower arm (275),
- a base (274) connecting the lower arm (275) to the upper arm (276), the base (274), the lower arm (275) and the upper arm (276) forming a housing configured to receive a peripheral edge (252) of the discharge grille (25).

4. Discharge grille (25) of an intermediate casing (12) of a turbomachine (100) according to claim 1, **characterised in that** the attachment means (283) have an inverted L shaped cross section and comprise:
- a lower arm (285) extending into the continuation of the base plate (281),
- a base (284) arranged projecting from the lower arm (285), the lower arm (285) forming, with the base (284), a shoulder (287) configured to receive a peripheral edge (252) of the discharge grille (25).

5. Discharge grille (25) of an intermediate casing (12) of a turbomachine (100) according to claim 1, **characterised in that** the attachment means (293) have an inverted L shaped cross section and comprise:
- a lower arm (295) extending into the continuation of the base plate (291),
- a base (294) arranged projecting from the lower arm (295), the lower arm (295) forming, with the base (294), a shoulder (297) configured to receive a peripheral edge (252) of the discharge grille (25),
- at least one protuberance (296) extending from the lower arm (295), parallel to the base (291), configured to cooperate with at least one boring (256) provided at the level of the peripheral edge (252) of the discharge grille (25).

6. Discharge grille (25) of an intermediate casing (12) of a turbomachine (100) according to any of the preceding claims, **characterised in that** the seal (26, 27, 28, 29) comprises bonding means to ensure the maintaining of the seal (26, 27, 28, 29) on the discharge grille (25).

7. Discharge grille (25) according to claim 1, **characterised in that**:
- the attachment means (263) of the seal (26) have an inverted U-shaped cross section and comprise:
o a lower arm (265) extending into the continuation of the base plate (261),
∘ an upper arm (266) substantially parallel to the lower arm (265), ∘ a base (264) connecting the lower arm (265) to the upper arm (266), the base (264), the lower arm (265) and the upper arm (266) forming a housing for receiving the peripheral edge (252) of the discharge grille (25),
- the peripheral edge (252) comprises a flat spot (253) provided in a lower part of said peripheral edge (252), to abut against the lower arm (265) of the attachment means (263).

8. Discharge grille (25) according to claim 1, **characterised in that**:
- the peripheral edge (252) comprises:
∘ at least one boring (254) and,
∘ a flat spot (253) provided in a lower part of said peripheral edge (252),
- the attachment means (273) have an inverted U-shaped cross section and comprise:
o a lower arm (275) extending into the continuation of the base plate (261) and comprising at least one through opening (278) suited to be arranged facing said at least one boring (254),
∘ an upper arm (276) substantially parallel to the lower arm (275),
∘ a base (274) connecting the lower arm (275) to the upper arm (276); the base (274), the lower arm (275) and the upper arm (276) forming a housing suited to receive the peripheral edge (252) of the discharge grille (25) such that the flat spot (253) abuts against the lower arm (275) of the attachment means (273),
∘ at least one slug (255) suited to traverse said at least one boring (254) provided in the peripheral edge (252) and said at least one through opening (278) provided in the lower arm (275) and to abut against the upper arm (276).

9. Discharge grille (25) according to claim 1, **characterised in that**:
- the peripheral edge (252) comprising a flat spot (253) provided in a lower part of said peripheral edge (252),
- the attachment means (283) have an inverted L shaped cross section and comprise:
o a lower arm (285) extending into the continuation of the base plate (261),
∘ a base (284) projecting from the lower arm (285),
o the lower arm (285) forming, with the base (284), a shoulder (287) suited to receive the peripheral edge (252) of the discharge grille (25) such that the flat spot (253) abuts against the lower arm (285) of the attachment means (273).

10. Discharge grille (25) according to claim 1, **characterised in that**:
- the peripheral edge (252) comprising:
- at least one boring (256),
- a flat spot (253) provided in a lower part of said peripheral edge (252),
- the attachment means (283) have an inverted L shaped cross section and comprise:
o a lower arm (295) extending into the continuation of the base plate (291),
∘ a base (294) projecting from the lower arm (295), the lower arm (295) forming, with the base (294), a bearing shoulder suited to receive a peripheral edge (252) of the discharge grille,
∘ at least one protuberance (296) extending from the lower arm (295) parallel to the base (294), suited to be introduced into said at least one boring (256) provided in the discharge grille (25).

11. Intermediate casing (12) of a bypass turbomachine (100), comprising:
- an inner annular shroud (14) configured to delimit a primary flow space (115) of a primary gas flow (F1) of the turbomachine (100),
- an outer annular shroud (15) configured to delimit a secondary flow space (117) of a secondary gas flow (F2) of the turbomachine (100),
- a discharge duct (21), extending between the inner annular shroud (14) and the outer annular shroud (15), said discharge duct (21) emerging on the one hand in the primary flow space (115) through an inlet orifice (18) formed in the inner annular shroud (14), and on the other hand in the secondary flow space (117) through an outlet orifice (20) formed in the outer annular shroud (15),
- a discharge grille (25) according to any of the preceding claims, fastened to the discharge duct (21), at the level of the outlet orifice (20) of the outer annular shroud (15),
- the seal (26, 27, 28, 29) arranged around the discharge grille (25), between the outer annular shroud (15) and the discharge duct (21) such that the base plate (261, 271, 281, 291) of the seal (26, 27, 28, 29) bears against the discharge duct (21), the sealing lip (262, 272, 282, 292) bears against the outer annular shroud (15) and that the attachment means (263, 273, 283, 293) are hooked onto a peripheral edge (252) of the discharge grille (25).

12. Turbomachine (100) **characterised in that** it comprises a low pressure compressor (112), a high pressure compressor (114) and an intermediate casing (12) according to claim 11, positioned longitudinally between the low pressure compressor (112) and the high pressure compressor (114).
